# EUROPEAN PATENT APPLICATION

(11) **EP 1 887 593 A1**
(43) Date of publication of application: **13.02.2008**
(21) Application number: 06118598.9
(22) Date of filing: 08.08.2006
(51) Int. Cl.: H01G 9/20

(54) **InN photosensitized TiO2 electrode**

(71) Applicant: Atomic Energy Council - Institute of Nuclear Energy Research, Lungtan, Taoyuan, Taiwan (TW)
(72) Inventor: Lin, Ming-Chang, Atlanta, GA 30307 (US); Tzeng, Yen-Chang, 234, Yonghe City, Taipei County (TW); Lan, Shan-Ming, 335, Daxi Town, Taoyuan County (TW); Lee, Yuan-Pern Atomic Energy Council, Chiaan Village, Lungtan Township, Taoyuan 32546 (TW); Diau, Wei-Guang Atomic Energy Council, Chiaan Village, Lungtan Township, Taoyuan 32546 (TW); Wei, Tsong-Yang, Neihu District, Taipei City 114 (TW); Chiu, Jyh-Perng, 269, Dongshan Shiang, Yilan County (TW); Lin, Li-Fu Atomic Energy Council, 333, Chiaan Village, Lungtan, Taoyuan (TW); Shieh, Der-Jhy, 300, Hsinchu City (TW); Kuo, Ming-Chao, 300, Hsinchu City (TW)
(74) Representative: Beck, Michael Rudolf

(57) **Abstract**

The present invention is a photosensitized electrode which absorbs sun light to obtain pairs of separated electron and hole. The photosensitized electrode is fabricated with simple procedure and has low cost. The electrode has excellent chemical resistance and is fitted to be applied in a solar cell device with enhanced sun-light absorbing ability. The present invention can be applied in an optoelectronic device or a hydrogen generator device too.

## Description

### Field of the invention

The present invention relates to an photosensitized electrode; more particularly, relates to obtaining a photosensitized electrode having an indium nitride (InN) photosensitive layer to be applied in a solar cell device, an optoelectronic device and a hydrogen generator device.

### Description of the Related Arts

During recent years, a nano-crystal film technology is utilized in a Dye-Sensitized Solar Cell (DSSC) so that the efficiency of photoelectrical transformation has gained a great improvement along with a cheap cost. Hence, the cost for a solar cell may quite possibly drop for about 1/10 to 1/5. The former DSSC basically uses smooth electrode; and its dye molecule layer (such as a ruthenium ligand series, a cyanine, a chlorophyll or a dye derived) transforms electric charge effectively only at a monolayer close to the semiconductor. Because a smooth electrode has small area for absorption with little absorbing ability, its photoelectrical transformation ability is low (less than 1%). Recently, a porous nano-structured electrode is introduced for solving this problem. Because the surface area of the catalyst is thousands times of that of the smooth electrode, the photoelectrical transformation ability is greatly improved. According to Michael Graetzel's research, the photoelectrical transformation efficiency of the DSSC is notably improved to 8%.

The DSSC obviously relies its efficiency on its nano electrode structure of titanium oxide (TiO₂). Therefore, on fabricating the TiO₂, the shape, the arrangement and the interface characteristic of nano-crystal has to be well-controlled. The inner surface area of the TiO₂ decides how much dye will be kept; the distribution of the holes affects the spreading of the redox pairs; the distribution of the granular size affects its optical characteristics; and the electron flow determines the connection between the particles. Nowadays, a TiO₂ electrode has a electron transferring rate of 10⁻⁴cm²/s; so the electrons are easy to be re-combined to the dye for an reaction.

Under a best experimental environment with a best dye, Graetzel, etc. make the transformation efficiency arrive at 10% which is quite close to that of a non-crystal system of 9%-10%; yet still worse than that of the multi-crystal system of 15%. And, as what is noteworthy, the costs for an organic dye/TiO₂ and a multi-crystal system are so high that their costs are still uncompetitive to that of petroleum fuel, like oil or gas.

A prior art is revealed in Taiwan, called "A solar cell unit and a module thereof", comprising an optoelectronic transformation layer with an upper and an lower surface; an anode layer obtained on the upper surface, comprising an anode conductive part extending out of the brim of the optoelectronic transformation layer; a cathode obtained on the lower surface, comprising a cathode conductive part extending out of the brim of the optoelectronic transformation layer; and more than one separating part set at the brim of the optoelectronic transformation layer, where the anode conductive part and the cathode conductive part is further extended out of the separating part; the optoelectronic transformation layer comprises a dye photosensitive layer and an electrolyte; the dye photosensitive layer is deposed on the anode layer; and the electrolyte is filled fully between the anode layer and the cathode layer.

Although the above DSSC has a great improvement in transformation ability, the cost is high and the fabricating procedure is complex that some elements in the environment has to be controlled, such as the granular size of the TiO₂ and the distribution of the particles. Besides, after the prior art of "A solar cell unit and a module thereof" is shone under the sun for a long time, the material may have a qualitative change to lose its photosensitivity with lifetime shortened. Hence, the prior arts do not fulfill users' requests on actual use.

### Summary of the invention

The main purpose of the present invention is to fabricating a photosensitized electrode with low cost and with long lifetime to be applied in a solar cell device having enhanced absorbing ability.

To achieve the above purpose, the present invention is an InN/TiO₂ photosensitized electrode, comprising a substrate, a TiO₂ film and an InN photosensitive layer, where a fabrication method for the photosensitized electrode comprises placing a substrate, coated with a TiO₂ film, in a reaction chamber; introducing hydrazoic acid (HN₃) and a compound containing indium into the reaction chamber; illuminating the InP photosensitive layer with an ultraviolet light; and obtaining an InN photosensitive layer on the TiO₂ film. Accordingly, a novel InN/TiO₂ photosensitized electrode is obtained.

### Brief descriptions of the drawings

The present invention will be better understood from the following detailed description of the preferred embodiment according to the present invention, taken in conjunction with the accompanying drawings, in which
FIG.1 is a structural view showing a preferred embodiment according to the present invention;
FIG.2 is a flow view showing the fabricating of the photosensitized electrode;
FIG.2A, FIG.2B, FIG.2C and FIG.2D are views showing step (a), step (b), step (c), and step(d) for fabricating the photosensitized electrode, respectively; and
FIG.3 is a view showing a state of use of the electrode.

### Description of the preferred embodiment

The following description of the preferred embodiment is provided to understand the features and the structures of the present invention.

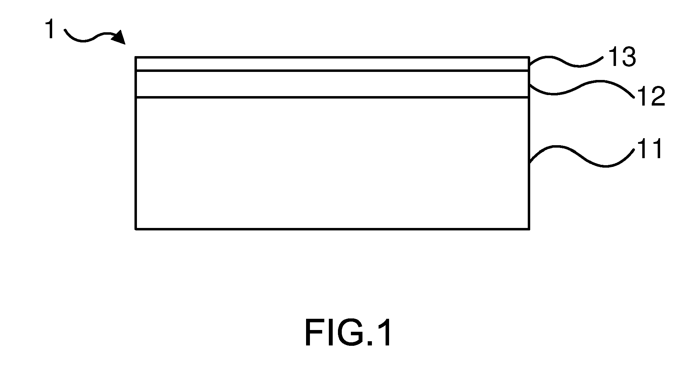

Please refer to FIG.1, which is a structural view showing a preferred embodiment according to the present invention. As shown in the figure, the present invention is an InN(indium nitride)/TiO₂ (titanium oxide) photosensitized electrode 1, comprising a substrate 11, a TiO₂ film 12 and an InN photosensitive layer 13.

The substrate 11 is an indium tin oxide (ITO) glass, an fluorine tin oxide (FTO) glass or other transparent conductive substrate.

The TiO₂ film 12 is covered on the substrate 11. The TiO₂ film 12 has a nanoparticle structure, where a plurality of nanoparticles are evenly distributed in the TiO₂ film 12, and where each nanoparticle has a diameter between 7nm (nanometer) and 50nm. The TiO₂ film 12 has a thickness between 100nm and 100000nm and is made of a metal oxide having a high band-gap.

The InN photosensitive layer 13 is made through a chemical vapor deposition (CVD), a physical vapor deposition (PVD) or other epitaxial film growth method. The InN photosensitive layer 13 is coated on the TiO₂ film 12. The InN photosensitive layer 132 has a thickness between 1 nm and 10000nm. Thus, with the above structure, a novel photosensitized electrode is obtained.

When a light penetrates through the substrate 11 of the photosensitized electrode 1 into the photosensitive layer 13, an electron is injected into the TiO₂ film 12 from the InN photosensitive layer 13 and then the electron is conducted to an outside circuit from the substrate, where the InN photosensitive layer 13 absorbs an optical wavelength between 390nm and 800nm.

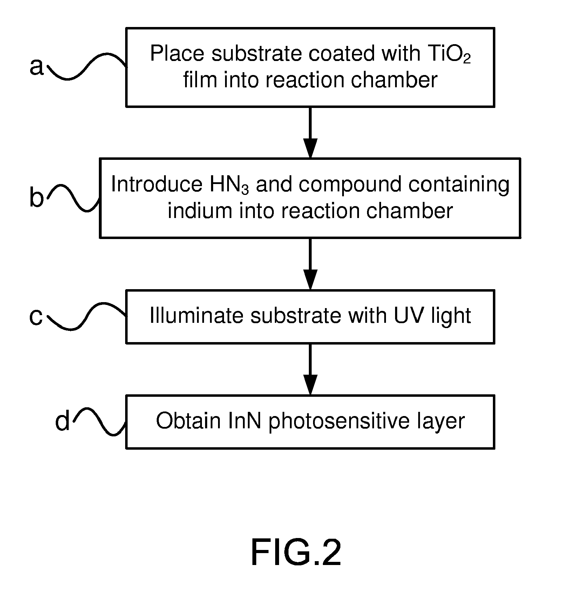

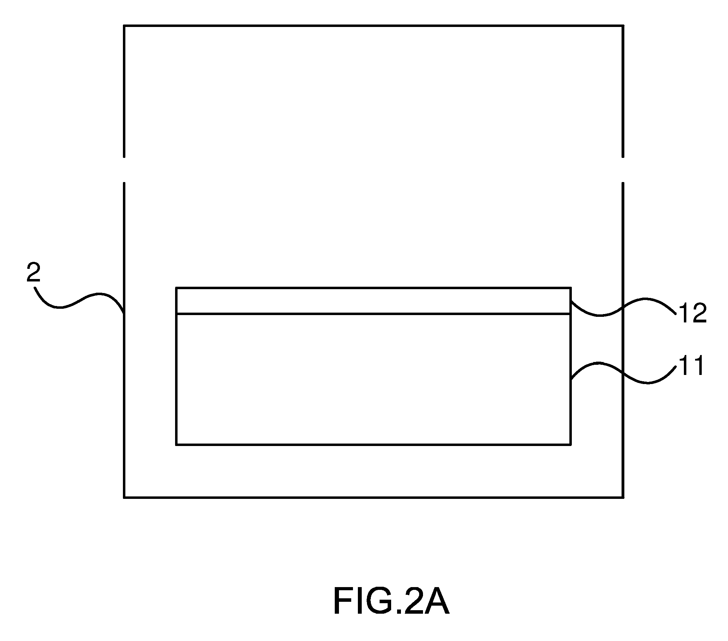

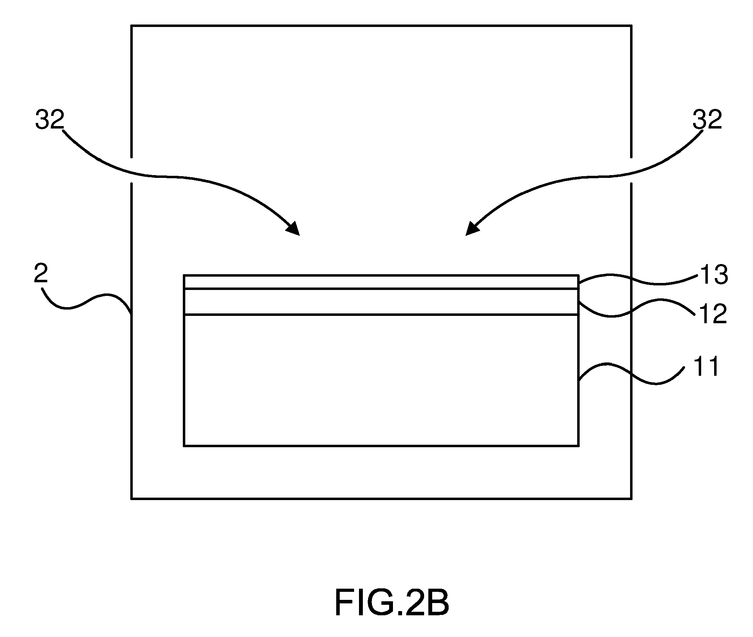

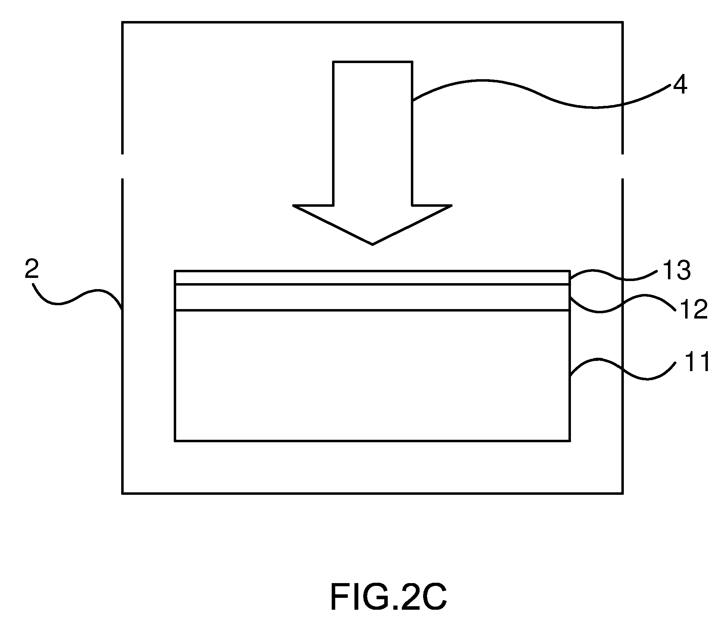

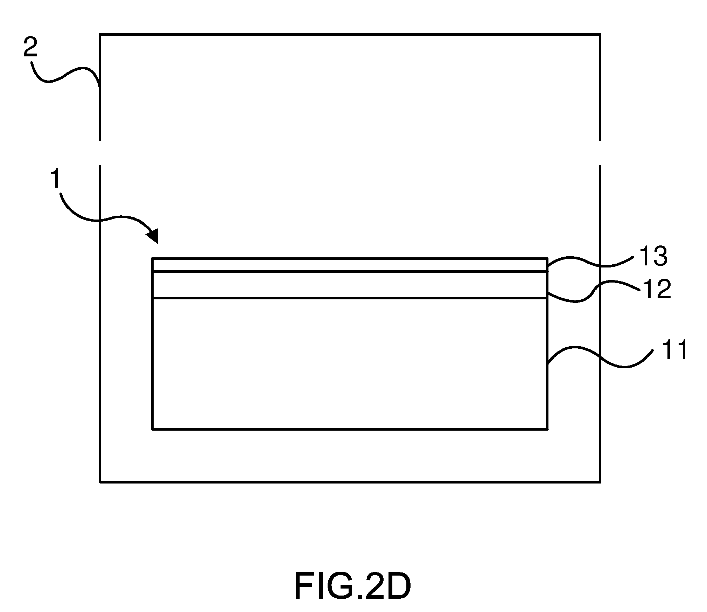

Please refer to FIG.2 and FIG.2A until FIG.2D, which are a flow view showing the fabricating of the photosensitized electrode and views showing step (a) until step(d) of the fabricating of the photosensitized electrode. As shown in the figures, the fabricating of the photosensitized electrode according to the present invention comprises the following steps:
Step (a): A substrate 11 coated with a TiO₂ film 12 is placed into a reaction chamber 2, where the TiO₂ film 12 is coated on the substrate 11 through a CVD or a PCD.
Step (b): A hydrazoic acid (HN3) 31 and a compound containing indium 32 is introduced into the reaction chamber 2, where the ratio of HN3 31 to the compound containing indium 32 is between 1 and 10. The compound containing indium 32 is a trimethylindium, a triethylindium, a indium-containing metallo-organic precursor or a combination of indium-containing metallo-organic precursors. The present invention uses the HN3 31 and the compound containing indium 32 as precursors; and the HN3 31 can be replaced with a compound containing nitrogen.
Step (c): The substrate 11 is then illuminated with an ultraviolet (UV) light, where the UV light is obtained from a continuous UV lamp, an excimer laser, a semiconductor laser, a gas laser, a solid-state laser, a liquid laser, a chemical laser or a free-electron laser, and where the Ti02 film 12 bears a temperature between 600°C (Celsius degree) and 900°C.
Step (d): An InN photosensitive layer 13 is obtained on the TiO₂ film 12. Thus, an InN photosensitized electrode 13 is obtained through the above steps, where the total process time is between 1hr and 8hr.

Please refer to FIG.3, which is a view showing a state of use of the electrode. As shown in the figure, the photosensitized electrode 1 according to the present invention is assembled with a platinum counter electrode 51 to form a solar cell device filled with an electrolyte 52 inside. The present invention can be applied to a solar cell device, a photovoltaic device, a hydrogen generation devices and an optoelectronic device.

To sum up, the present invention is an In N/TiO2 photosensitized electrode, where a lifetime issue of the dye for a Dye-Sensitized Solar Cell (DSSC) is solved; an optical absorption efficiency is enhanced; a production procedure is simplified; and a production cost is reduced.

The preferred embodiment herein disclosed is not intended to unnecessarily limit the scope of the invention. Therefore, simple modifications or variations belonging to the equivalent of the scope of the claims and the instructions disclosed herein for a patent are all within the scope of the present invention.

## Claims

1. An InN(indium nitride)/TiO₂(titanium oxide) photosensitized electrode, comprising:
a substrate;
a TiO₂ film, said TiO₂ film covering on said substrate; and
an InN photosensitive layer, said InN photosensitive layer coating on said InP photosensitive layer.

2. The photosensitized electrode according to claim 1, wherein said substrate is a transparent conductive substrate selected from a group consisting of an indium tin oxide (ITO) glass and an fluorine tin oxide (FTO) glass.

3. The photosensitized electrode according to claim 1 or 2, wherein said TiO₂ film has a nanoparticle structure.

4. The photosensitized electrode according to claim 3, wherein said nanoparticle has a diameter between 7nm (nanometer) and 50nm.

5. The photosensitized electrode according to one of claims 1 to 4, wherein said TiO₂ film has a thickness between 100nm and 100000nm.

6. The photosensitized electrode according to one of claims 1 to 5, wherein said InN photosensitive layer has a thickness between 1nm and 10000nm.

7. The photosensitized electrode according to one of claims 1 to 6, wherein said InN photosensitive layer absorbs light having a wavelength between 390nm and 600nm.

8. The photosensitized electrode according to one of claims 1 to 7, said photosensitized electrode having a fabrication method comprising steps of:
a. placing a substrate in a reaction chamber, said substrate coated with a TiO₂ film;
b. introducing a hydrazoic acid (HN₃) and a compound containing indium into said reaction chamber;
c. illuminating said TiO₂ film with an ultraviolet (UV) light; and
d. obtaining an InN photosensitive layer coated on said TiO₂ film.

9. The method according to claim 8, wherein said compound containing indium is selected from a group consisting of a trimethylindium, a triethylindium, a indium-containing metallo-organic precursor and a combination of indium-containing metallo-organic precursors.

10. The method according to claim 9, wherein said hydrazoic acid is a compound containing nitrogen.

11. The method according to claim 8 or 9, wherein a ratio of said HN₃ to said compound containing indium is between 1 and 10.

12. The method according to one of claims 8 to 11, wherein said TiO₂ film bears a temperature between 600°C (Celsius degrees) and 900°C.

13. The method according to one of claims 8 to 13, wherein a period of time for processing all steps of said step (a) until step (d) is between 1hr (hour) and 8hrs.

14. The method according to one of claims 8 to 13, wherein said UV light is obtained from a light source selected from a group consisting of a continuous UV lamp, an excimer laser, a semiconductor laser, a gas laser, a solid-state laser, a liquid laser, a chemical laser and a free-electron laser.
